Europäisches Patentamt

European Patent Office

Office européen des brevets

(11) Publication number: **0 304 466**
**B1**

(12) EUROPEAN PATENT SPECIFICATION

(45) Date of publication of patent specification: **07.11.90**

(21) Application number: **88902598.7**

(22) Date of filing: **08.03.88**

(86) International application number:
**PCT/SE88/00111**

(87) International publication number:
**WO 88/07165 22.09.88 Gazette 88/21**

(51) Int. Cl.⁵: **F 27 D 3/14, F 27 D 23/04, F 04 F 1/02 // C22B21/00**

(54) DEVICE FOR LIQUID PUMPING.

(30) Priority: **09.03.87 SE 8700966**
**10.04.87 SE 8701514**

(43) Date of publication of application:
**01.03.89 Bulletin 89/09**

(45) Publication of the grant of the patent:
**07.11.90 Bulletin 90/45**

(84) Designated Contracting States:
**AT BE CH DE FR GB IT LI NL**

(56) References cited:
**SE-B- 449 790**
**US-A-3 973 763**
**US-A-4 355 789**
**US-A-4 518 424**

(73) Proprietor: **GRÄNGES ALUMINIUM AKTIEBOLAG**
**S-105 45 Stockholm (SE)**

(72) Inventor: **KAGSTRÖM, Per-Olof**
**Kalkugnsvägen 10A**
**S-612 00 Finspang (SE)**

(74) Representative: **Frankland, Nigel Howard et al**
**FORRESTER & BOEHMERT Widenmayerstrasse 4/I**
**D-8000 München 22 (DE)**

Courier Press, Leamington Spa, England.

## Description

The present invention relates to an arrangement for pumping a liquid. An arrangement in accordance with the invention includes a main chamber, where the main portion of the liquid to be pumped is located, and a pump chamber which is arranged to receive a portion of the liquid which is to be pumped. The pump chamber is provided with means to effect a cyclic variation of the pressure within the pump chamber between a relatively high pressure and a relatively low pressure, when compared with the pressure in the main chamber where the main portion of the liquid is located. The pump chamber is further provided with at least input opening extending from the main chamber and at least one output opening extending to the main chamber.

It is envisaged that an arrangement in accordance with the invention can be used to pump all kinds of liquids, for example, molten metal, and may thus be used for stirring pools of molten metal in connection with holding or de-gasifying such pools of molten metal. Alternatively arrangements in accordance with the invention can be used to pump or circulate aggressive or corrosive liquids, or may be used to pump mixtures of two liquids to reduce the risk of an emulsion forming.

It has been proposed to provide furnaces for melting metal, such as aluminium scrap, which have means for circulating the molten aluminium within the furnace. Such furnaces generally comprise a main chamber provided with heating means, typically in the form of gas or oil burners, for melting heavy scrap material, and also comprise a side chamber to be charged with small scrap material to be melted. A pump chamber is provided for circulating molten metal between the main chamber and the side chamber. A furnace of this type is disclosed in Se-A-8200622-2. In the furnace disclosed in this Specification pistons are used as valves which open and close passages between the pump chamber and the main chamber or the side chamber to control the flow of molten metal between the main chamber and the side chamber. However, such pistons are subject to heavy wear in the hostile environment in which they work, and must therefore be replaced regularly. This entails a maintenance cost. Furthermore, the provision of piston valves also entails a comparatively high initial capital cost for the equipment.

The main object of the present invention is to provide an arrangement for pumping liquid, which can be used to pump molten metal as well as for pumping many other types of liquid for stirring or circulation of the liquid, without the use of movable piston valves, so that the maintenance costs are reduced to a minimum, and also so that the initial capital costs may be reduced substantially as compared with the prior art.

According to one aspect of this invention there is provided, an arrangement for pumping a liquid, said arrangement comprising a main chamber where the main portion of the liquid is retained, and a pump chamber arranged to receive a portion of the liquid to be pumped, and means for effecting a cyclic variation of the pressure within the pump chamber between a relatively high pressure and a relatively low pressure having regard to the pressure in the main chamber, the pump chamber being provided with at least one input opening and at least one output opening communicating with the main chamber wherein the input opening has a substantially lower flow resistance in the direction into the pump chamber than in the opposite direction, and in that the output opening has a substantially lower flow resistance in the direction out of the pump chamber than in the opposite direction, so that with a reduction of pressure in the pump chamber a larger quantity of liquid is sucked into the pump chamber through the input opening than through the output opening and so that with a relatively high pressure in the pump chamber a larger quantity of liquid is forced out through the output opening than through the input opening so that with a cyclical variation in pressure within the pump chamber, a net liquid quantity is sucked in through the input opening and is forced out through the output opening.

It will be understood that since the input opening of the pump chamber has a substantially lower flow resistance in the direction into the pump chamber than in the opposite direction, and since the output opening of the pump chamber has a substantially lower flow resistance in the direction extending away from the pump chamber than in the opposite direction, a net quantity of liquid can be sucked in through the input opening and forced out through the output opening by pressure variations in the pump chamber without the use of any movable valves.

Preferably the said openings are designed as channels having less flow resistance in one direction than in the other direction.

Due to the fact that in preferred embodiments of the invention the openings are shaped as channels, that is to say they have a certain length in the flow direction, a flow resistance which is dependent upon the direction of flow can easily be provided by designing the channels appropriately. This means that the flow quantity per unit time can be made different, with different directions of flow, in an easy way. Thus it will be understood that with a cyclic variation of the pressure in the pump chamber a net flow is obtained in the direction in which the flow resistance is the least.

Conveniently each channel has a flow area which decreases in the intended flow direction.

Preferably the channels have outwardly directed edges at the end where the flow area is largest.

Advantageously the channels have smooth rounded edges at the end where the flow area is largest.

Preferably the channels have sharp edges at the end where the flow area is least.

Conveniently the flow area of each channel decreases substantially continuously along at least a portion of the length between the ends of the channel.

Advantageously the flow area of each channel decreases substantially continuously along the full length between the opposed ends of the channel.

Alternatively each opening is provided with means to cause turbulence for a flow in one direction, but not in the opposite direction.

In such an embodiment at least one channel may be provided with inserted elements causing said turbulence.

The invention also relates to an arrangement as described for pumping metal in a melting furnace, which furnace has a main chamber and a side chamber, said pump chamber being connected to the main chamber and to the side chamber so that, in operation of the device, molten metal is pumped from the main chamber, through the pump chamber, to the side chamber, or in the opposite direction.

Preferably all said openings are designed as channels having less flow resistance in one direction than in the other direction, and in that the channels are so related that the flow resistance in all channels is less either in the direction from the main chamber, through the pump chamber, to the side chamber, or in the opposite direction.

Two embodiments of an arrangement according to the invention will now be described by way of example with reference to the accompanying drawings in which

FIGURE 1 is a schematic horizontal sectional view of a melting furnace of the general type described above having a main chamber and a pump chamber, in accordance with the invention,

FIGURE 2 is a schematical horizontal sectional view of a similar melting furnace, this furnace having a main chamber, a side chamber and a pump chamber, and

FIGURE 3 is a vertical sectional view taken through part of the melting furnace of Figure 1 (which is exactly equivalent to the corresponding part of the furnace of Figure 2), illustrating means for providing the relatively high pressure and the relatively low pressure in the pump chamber.

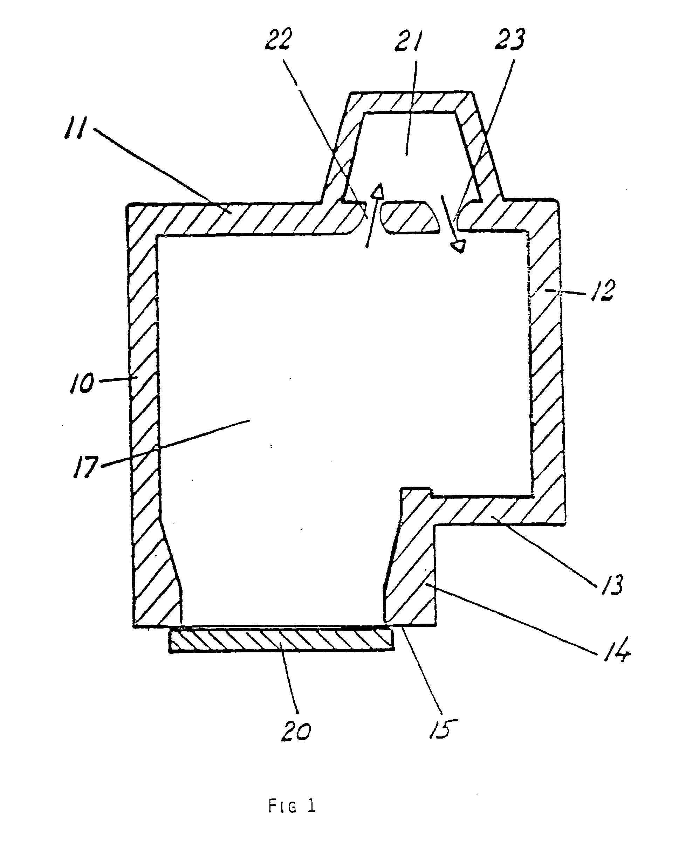

Referring now to the drawings the furnace which is shown in plan cross-section in Figure 1 comprises upstanding side walls 10, II, 12, 13 and 14. The furnace also comprises a lower bottom wall or base and a top wall or cover, which are not shown. One side wall 15 of the furnace chamber is provided with a removable cover or port 20 to enable the main chamber to be charged with heavy aluminium scrap. The opposite side wall 11 of the furnace is associated with a pump chamber 21 which is mounted on the exterior of the furnace. The pump chamber is hollow and is connected to the main chamber by means of two channels 22, 23 formed in the side wall 11 at spaced-apart positions. As will be explained hereinafter molten metal can circulate from the main chamber through the channel 22 into the pump chamber 21 and may then flow back into the main chamber through the channel 23, as indicated by means of arrows in Figure 1. It will be understood that this will cause a stirring of the molten metal leading to a more equal distribution of the heat supplied to the molten metal, and may facilitate de-gasifying the molten metal.

As can be seen from Figure 1 the channels 22 and 23 are designed with successively decreasing flow areas in the direction of intended flow through the channels. The channel 22 has its largest flow area at the end adjacent the main chamber 17, and its smallest flow area at the end adjacent the pump chamber 21. Conversely the channel 23 has its largest flow area at the end adjacent the pump chamber 21, and its smallest flow area at the end adjacent the main chamber 17. Both channels 22, 23 have outwardly directed edges which are smoothly rounded at the end thereof having the largest flow area, and sharp edges or corners at the end having the smallest flow area. Due to this design, each channel has a different flow resistance to a flow in one direction as compared with the flow resistance to a flow in the opposite direction. The channel 22 has a substantially smaller flow resistance for molten metal flowing from the main chamber 17 into the pump chamber 21, than for metal flowing from the pump chamber into the main chamber 17. Conversely the channel 23 has a substantially smaller flow resistance for molten metal flowing from the pump chamber 21 into the main chamber 17 than for molten metal flowing from the main chamber 17 into the pump chamber 21.

If the pressure in the pump chamber is lower than the pressure in the main chamber molten metal will flow into the pump chamber through both the channels 22 and 23, but a larger quantity of molten metal will flow into the pump chamber through the channel 22 than through the channel 23. Similarly if the pressure in the pump chamber is higher than the pressure in the main chamber 17, whilst molten metal will flow into the main chamber through both the channel 22 and the channel 23, a larger quantity of molten metal will flow into the main chamber through the channel 23 than through the channel 22. It will be appreciated that if the pressure in the pump chamber is cyclically reduced below the pressure in the main chamber and is then increased to a level higher than the pressure in the main chamber, during each cycle there will be a net flow of molten metal from the main chamber through the channel 22 into the pump chamber, through the pump chamber and out of the pump chamber through the channel 23 as indicated by means of the arrows shown on Figure 1. Thus, if there is a cyclic variation of pressure in the pump chamber, a circulation of molten metal will be provided in the main chamber.

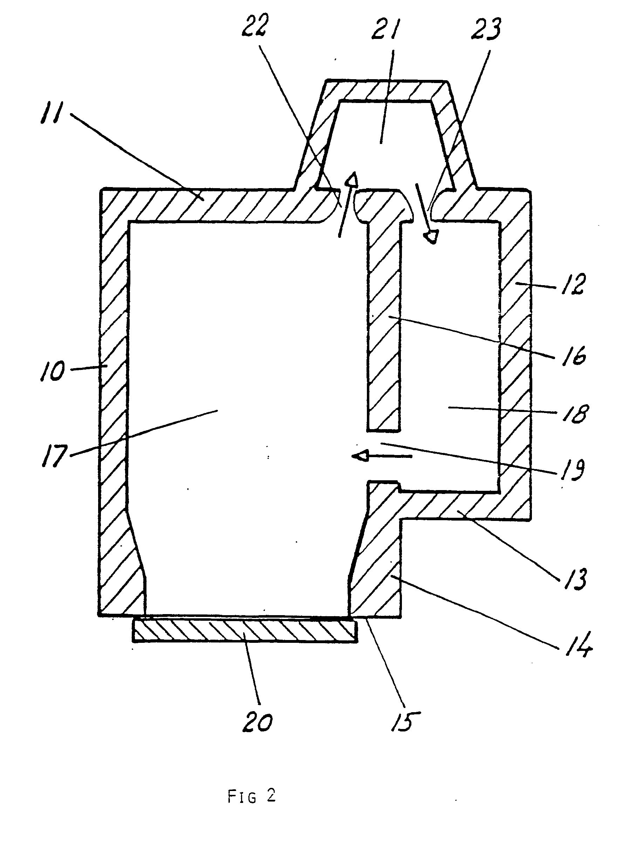

The furnace shown in Figure 2 has many features which are identical with the features of the furnace shown in Figure 1, and these features carry the same reference numerals and will not be described in detail again. However, the furnace shown in Figure 2 is provided with a partition 16 which has the effect that the furnace chamber is divided into a main chamber 17 and a side chamber 18. The side chamber 18 is connected to the main chamber by an opening 19 formed in the partition 16. The main chamber is connected to the pump chamber by means of the channel 22 and the side chamber is connected to the pump chamber through the channel 23. The furnace operates in the same way as the furnace according to Figure 1 with a difference that if there is a cyclic variation of the pressure in the pump chamber, a net flow of molten metal flows from the main chamber, through the pump chamber, to the side chamber and back from the side chamber into the main chamber. Of course, the channels 22 and 23 may be reversed so that the flow extends from the side chamber, through the pump chamber and back into the main chamber.

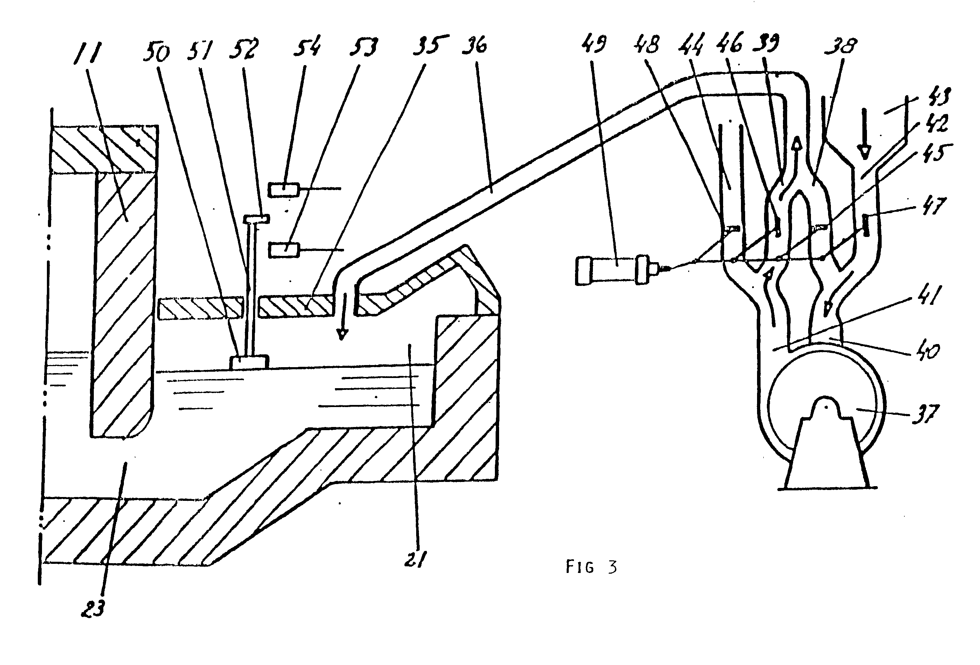

In order to assist in understanding how the pressure in the pump chamber 21 of the embodiment shown in Figure 1 (or the embodiment shown in Figure 2) may be given a cyclic variation in pressure, reference may be made to Figure 3 which illustrates such a pump chamber 21 in vertical section. It can be seen that the pump chamber 21 is provided with a cover 35, which effectively seals the chamber 21 so that a closed space is formed therein. This closed space is connected to a fan or blower 37 through a conduit 36. In the region of the fan or blower the conduit is divided into two branches 38, 39. The branch 38 is connected to the intake side 40 of the fan or blower, and the branch 39 is connected to the exhaust side 41 of the fan or blower. The intake side 40 of the fan or blower is further connected to the ambient atmosphere through a conduit 42 and an air filter 43, whilst the exhaust side 41 of the fan or blower is also connected to a conduit 44 for the exhaust of air from the fan.

It will be understood that the conduits 38, 39, 42 and 44 are, in the region of the fan, each provided with a respective throttle valve 45, 46, 47 and 48. The valves 45, 46, 47 and 48 may be adjusted by means of a pneumatic control arrangement 49, in order to open and close the separate conduits. The valves are operatively connected in pairs and are also interconnected so that when one pair of valves is open the other pair of valves is shut and vice-versa. Thus the intake side 40 of the fan or blower may be connected to the conduit 36 leading to the pump chamber while the exhaust side 41 of the fan or blower is connected to the conduit 41 for discharging exhaust air from the fan or blower to the atmosphere or, alternatively, the exhaust side 41 of the fan or blower may be connected to the conduit 36 leading to the pump chamber while the intake side 40 of the fan or blower is connected to the conduit 42 and the air filter 43 which provides an input of air. In the first case, a reduction of pressure is provided in the pump chamber, with regard to the ambient pressure in the main chamber, and in the second case (which is illustrated in Figure 3) a relatively high pressure is provided in the pump chamber. The relatively low pressure and the relatively high pressure may each be about 0.2 bar lower than and higher than the ambient pressure in the main chamber, respectively.

In the illustrated embodiment the pump chamber is provided with a float having a floating body 50 which can move vertically. The float is illustrated floating on the surface of molten metal within the pump chamber 21. The body 50 is attached to a guide rod 51 which passes through a seal in the cover 35 of the pump chamber. The top end of the guide rod 51 is provided with an element 52 which is arranged to co-operate with a lower signal generator 53 and an upper signal generator 54, when the element 52 is adjacent the lower and upper signal generators respectively. The signals indicate when the level of metal within the pump chamber is at a predetermined minimum level and a predetermined maximum level respectively. The floating body 50 and the guide rod 51 with the element 52 are shown in Figure 3 at an intermediate position.

The signal generators 53, 54 are connected to a control device (not shown) which controls the throttle valves 45, 46, 47 and 48 at the fan or blower to provide a cyclic variation of the pressure in the pump chamber.

Due to the cyclic variation of the pressure in the pump chamber, and due to the design of the channels as described above, a net flow of molten metal will flow from the main chamber 17, through the pump chamber 21 and back into the main chamber, optionally through the side chamber illustrated in Figure 2. This causes a circulation of the molten metal in the main chamber. The cyclic variation of the pressure in the pumping chamber can occur with a frequency of one cycle per minute. With a pump chamber volume of 4 cubic metres, this will give a pumping capacity of about 2 to 3 tonnes of aluminium per minute.

Whilst only two embodiments of an arrangement in accordance with the invention have been illustrated and described, it will be understood that many modifications may be effected within the scope of the invention as defined by the following Claims. For example, the pump chamber need not necessarily be formed integrally with the main chamber, but may form a separate unit which can be connected to the main chamber by means of suitable conduits. The channels between the pump chamber and the main chamber may thus be defined by the conduits. The channels between the pump chamber and the main chamber may have a decreasing flow area along only a portion of the full length thereof or, alternatively, along the full length of each channel. Each channel may, for example, have the shape of a trumpet or of a truncated cone.

The edges of the channels at the end where the flow areas is largest may be tapered instead of being rounded. The edges of the channels at the ends where the flow area is smallest may be more or less sharp. The sharper the edges are, the higher is the flow resistance for the liquid flowing into the channels at the end having the sharp edges.

The channels may also consist partly or completely of tube portions which project from the wall of the main furnace portion and the pumping chamber, thus forming a sharp edge at the end of the channel where the flow area is smallest. The channels may thus be made longer than the thickness of the wall through which they run. The channels need not extend perpendicularly through the wall through which they run and may thus make an angle other than 90° with the wall through which they run.

The channels may be designed with several different sections, if necessary, to obtain the desired difference in flow resistance between the flows in different directions.

Instead of designing the channels with a decreasing flow area, the channels may be designed to give turbulence or disturbances in the flow, which turbulence or disturbances are different for different flow directions. In this way different flow resistances in different directions may be obtained. This may be achieved by means of one or more elements inserted in the channels.

It is to be understood that embodiments of the invention may be fabricated with several input openings or input channels and several output openings or output channels leading to and from, respectively, the pump chamber. Some or all of these several channels may be provided with different flow areas along their length. However, in all embodiments, it is essential that the openings or channels are designed in such a way that a net quantity of the liquid is fed through the input and the output opening or openings, so that a net flow is obtained through the pump chamber, during each cycle of pressure variation within the pump chamber.

## Claims

1. In arrangement for pumping a liquid, said arrangement comprising a main chamber (17) where the main portion of the liquid is retained, and a pump chamber (21) arranged to receive a portion of the liquid to be pumped, and means (36-49) for effecting a cyclic variation of the pressure within the pump chamber between a relatively high pressure and a relatively low pressure having regard to the pressure in the main chamber (17), the pump chamber (21) being provided with at least one input opening (22) and at least one output opening (23) communicating with the main chamber (17) characterised in that the input opening (22) has a substantially lower flow resistance in the direction into the pump chamber than in the opposite direction, and in that the output opening (23) has a substantially lower flow resistance in the direction out of the pump chamber than in the opposite direction, so that with a reduction of pressure in the pump chamber a larger quantity of liquid is sucked into the pump chamber through the input opening (22) than through the output opening (23) and so that with a relatively high pressure in the pump chamber a larger quantity of liquid is forced out through the output opening (23) than through the input opening (22) so that with a cyclical variation in pressure within the pump chamber, a net liquid quantity is sucked in through the input opening and is forced out through the output opening.

2. An arrangement according to Claim 1 characterised in that the said openings are designed as channels (22, 23) having less flow resistance in one direction than in the other direction.

3. An arrangement according to Claim 2 characterised in that each channel (22, 23) has a flow area which decreases in the intended flow direction.

4. An arrangement according to Claim 3 characterised in that the channels (22, 23) have outwardly directed edges at the end where the flow area is largest.

5. An arrangement according to Claim 4 characterised in that the channels (22, 23) have smooth rounded edges at the end where the flow area is largest.

6. An arrangement according to any one of Claims 3 to 5 characterised in that the channels (22, 23) have sharp edges at the end where the flow area is least.

7. An arrangement according to any one of Claims 3 to 6 characterised in that the flow area of each channel (22, 23) decreases substantially continuously along at least a portion of the length between the ends of the channel.

8. An arrangement according to Claim 7, characterised in that the flow area of each channel (22, 23) decreases substantially continuously along the full length between the opposed ends of the channel.

9. A device according to Claim 1 or Claim 2 characterised in that each opening is provided with means to cause turbulence for a flow in one direction, but not in the opposite direction.

10. An arrangement according to Claim 9 characterised in that at least one channel is provided with inserted elements causing said turbulence.

11. An arrangement according to any one of the preceding Claims for pumping metal in a melting furnace, which furnace has a main chamber (17) and a side chamber (18), said pump chamber (21) being connected to the main chamber and to the side chamber so that, in operation of the device, molten metal is pumped from the main chamber, through the pump chamber, to the side chamber, or in the opposite direction.

12. An arrangement according to Claim 11 wherein all said openings are designed as channels (22, 23) having less flow resistance in one direction than in the other direction, and in that the channels (22, 23) are so related that the flow resistance in all channels is less either in the direction from the main chamber (17), through the pump chamber (21), to the side chamber (18), or in the opposite direction.

## Patentansprüche

1. Anordnung zum Pumpen einer Flüssigkeit, wobei besagte Anordnung eine Hauptkammer (17), in der der Hauptteil der Flüssigkeit zurückgehalten wird, und eine Pumpkammer (21), die so angeordnet ist, daß sie einen Teil der zu pumpenden Flüssigkeit aufnimmt, und Mittel (36—49) zum Bewirken einer zyklischen Veränderung des Drucks innerhalb der Pumpenkammer zwischen einem relativ hohen Druck und einem relativ niedrigen Druck bezogen auf den Druck in der Hauptkammer (17) umfaßt, wobei die Pumpenkammer (21) mit zumindest einer Einlaßöffnung (22) und zumindest einer Auslaßöffnung (23) versehen ist, die mit der Hauptkammer (17) in Verbindung stehen, dadurch gekennzeichnet, daß die Einlaßöffnung (22) einen wesentlich niedrigeren Strömungswiderstand in der Richtung in die Pumpkammer hinein als in der entgegengesetzten Richtung besitzt und daß die Auslaßöffnung (23) einen wesentlich niedrigeren Strömungswiderstand in der Richtung aus der Pumpkammer heraus als in der entgegengesetzten Richtung besitzt, so daß mit einer Druckverringerung in der Pumpkammer eine größere Flüssigkeitsmenge durch die Einlaßöffnung (22) als durch die Auslaßöffnung (23) in die Pumpkammer gesaugt wird, und bei einem relativ hohen Druck in der Pumpkammer eine größere Flüssigkeitsmenge durch die Auslaßöffnung (23) als durch die Einlaßöffnung (22) herausgedrückt wird, so daß bei einer zyklischen Veränderung im Druck innerhalb der Pumpkammer eine Nettoflüssigkeitsmenge durch die Einlaßöffnung eingesaugt und durch die Auslaßöffnung herausgedrückt wird.

2. Anordnung nach Anspruch 1, dadurch gekennzeichnet, daß die besagten Öffnungen als Kanäle (22, 23) konstruiert sind, die in einer Richtung weniger Strömungswiderstand als in der anderen Richtung besitzen.

3. Anordnung nach Anpruch 2, dadurch gekennzeichnet, daß jeder Kanal (22, 23) einen Durchflußquerschnitt besitzt, der in der beabsichtigten Strömungsrichtung abnimmt.

4. Anordnung nach Anspruch 3, dadurch gekennzeichnet, daß die Kanäle (22, 23) an dem Ende, an dem der Durchflußquerschnitt am größten ist, nach außen gerichtete Kanten besitzen.

5. Anordnung nach Anspruch 4, dadurch gekennzeichnet, daß die Kanäle (22, 23) an dem Ende, an dem der Durchflußquerschnitt am größten ist, glatt abgerundete Kanten besitzen.

6. Anordnung nach einem der Ansprüche 3—5, dadurch gekennzeichnet, daß die Kanäle (22, 23) an dem Ende, an dem der Durchflußquerschnitt am geringsten ist, scharfe Kanten besitzen.

7. Anordnung nach einem der Ansprüche 3-6, dadurch gekennzeichnet, daß der Durchflußquerschnitt jedes Kanals (22, 23) im wesentlichen kontinuierlich entlang wenigstens eines Teils der Länge zwischen den Enden des Kanals abnimmt.

8. Anordnung nach Anspruch 7, dadurch gekennzeichnet, daß der Durchflußquerschnitt jedes Kanals (22, 23) im wesentlichen kontinuierlich entlang der gesamten Länge zwischen den entgegengesetzten Enden des Kanals abnimmt.

9. Vorrichtung nach Anspruch 1 oder 2, dadurch gekennzeichnet, daß jede Öffnung mit Mitteln versehen ist, um für einen Durchfluß in einer Richtung, nicht aber in der entgegengesetzten Richtung Turbulenz zu erzeugen.

10. Anordnung nach Anspruch 9, dadurch gekennzeichnet, daß wenigstens ein Kanal mit eingebauten Elementen versehen ist, die besagte Turbulenz bewirken.

11. Anordnung nach einem der vorangehenden Ansprüche zum pumpen von Metall in einem Schmelzofen der eine Hauptkammer (17) und eine Seitenkammer (18) besitzt, wobei besagte Pumpkammer (21) so mit der Hauptkammer und mit der Seitenkammer verbunden ist, daß beim Betrieb der Vorrichtung geschmolzenes Metall aus der Hauptkammer durch die Pumpkammer zur Seitenkammer gepumpt wird oder in der entgegengesetzten Richtung.

12. Anordnung nach Anspruch 11, dadurch gekennzeichnet, daß alle besagten Öffnungen als Kanäle (22, 23) mit geringerem Strömungswiderstand in einer Richtung als in der anderen Richtung konstruiert sind, und daß die Kanäle (22, 23) so in Beziehung zueinander gesetzt sind, daß der Strömungswiderstand in allen Kanälen entweder in der Richtung von der Hauptkammer (17) durch die pumpkammer (21) zur Seitenkammer (18) oder in der entgegengesetzten Richtung geringer ist.

**Revendications**

1. Dispositif pour pomper un liquide, ledit dispositif comprenant une chambre principale (17) dans laquelle la partie principale du liquide est retenue et une chambre de pompage (21), agencée de manière à recevoir une partie du liquide devant être pompé, et des moyens (36—49) pour produire une modification cyclique de la pression à l'intérieur de la chambre de pompage, entre une pression relativement élevée et une pression relativement faible par rapport à la pression régnant dans la chambre principale (17), la chambre de pompage (21) étant pourvue d'au moins une ouverture d'entrée (22) et d'au moins une ouverture de sortie (23), communiquant avec la chambre principale (17), caractérisé en ce que l'ouverture d'entrée (22) présente une résistance d'écoulement nettement plus faible en direction de la chambre de pompage que dans la direction opposée, et en ce que l'ouverture de sortie (23) possède une résistance d'écoulement nettement plus faible dans la direction de sortie hors de la chambre de pompage que dans la direction opposée, de sorte que, dans le cas d'une réduction de la pression dans la chambre de pompage, une quantité plus importante de liquide est aspirée dans la chambre de pompage par l'intermédiaire de l'ouverture d'entrée (22) que par l'intermédiaire de l'ouverture de sortie (23) et dans le cas de l'existence d'une pression relativement élevée dans la chambre de pompage, le liquide est refoulé en une quantité plus importante par l'ouverture de sortie (23) que par l'ouverture d'entrée (22) de sorte que dans le cas d'une variation cyclique de la pression à l'intérieur de la chambre de pompage, une quantité nette de liquide est aspirée dans cette chambre par l'ouverture d'entrée et est refoulée par l'ouverture de sortie.

2. Dispositif selon la revendication 1, caractérisé en ce que lesdites ouvertures sont agencées sous la forme de conduits (22, 23), possédant une résistance d'écoulement plus faible dans une direction que dans l'autre direction

3. Dispositif selon la revendication 2, caractérisé en ce que chaque conduit (22, 23) possède une surface d'écoulement qui diminue dans la direction d'écoulement prévue.

4. Dispositif selon la revendication 3, caractérisé en ce que les conduits (22, 23) possèdent des bords dirigés vers l'extérieur, sur l'extrémité où la surface d'écoulement est maximale.

5. Dispositif selon la revendication 4, caractérisé en ce que les panneaux (22, 23) possèdent des bords arrondis lisses au niveau de l'extrémité où la surface d'écoulement est maximale.

6. Dispositif selon l'une quelconque des revendications 3 à 5, caractérisé en ce que les conduits (22, 23) possèdent des arêtes vives au niveau de l'extrémité où la surface d'écoulement est minimale.

7. Dispositif selon l'une quelconque des revendications 3 à 6, caractérisé en ce que la surface d'écoulement de chaque conduit (22, 23) diminue d'une manière sensiblement continue le long d'au moins une partie de la longueur, entre les extrémités du conduit.

8. Dispositif selon la revendication 7, caractérisé en ce que la surface d'écoulement de chaque conduit (22, 23) diminue sensiblement de façon continue sur toute son étendue en longueur, entre les extrémités opposées du conduit.

9. Dispositif selon la revendication 1 ou 2, caractérisé en ce que chaque ouverture comporte des moyens pour provoquer une turbulence pour l'écoulement dans une direction, mais pas dans la direction opposée.

10. Dispositif selon la revendication 9, caractérisé en ce qu'au moins un conduit est pourvu d'éléments insérés en lui, provoquant ladite turbulence.

11. Dispositif selon l'une quelconque des revendications précédentes pour le pompage d'un métal dans un four de fusion, lequel four possède une chambre principale (17) et une chambre latérale (18), ladite chambre de pompage (21) étant raccordée à la chambre principale et à la chambre latérale de sorte que, pendant le fonctionnement du dispositif, le métal fondu est entraîné par pompage depuis la chambre principale en traversant la chambre de pompage jusqu'à la chambre latérale, ou dans la direction opposée.

12. Dispositif selon la revendication 11, dans lequel l'ensemble desdites ouvertures sont agencées sous la forme de conduits (22, 23) possédant une résistance d'écoulement plus faible dans une direction que dans l'autre direction, et en ce que les conduits (22, 23) sont disposés l'un par rapport à l'autre de manière que la résistance d'écoulement dans tous les canaux est plus faible soit dans la direction partant de la chambre principale (17) pour aboutir à la chambre latérale (18) en passant par la chambre de pompage (21), soit dans la direction opposée.

FIG 1

FIG 2

FIG 3

EP 0 304 466 B1